(19) Europäisches Patentamt / European Patent Office / Office européen des brevets

(11) **EP 2 364 035 B1**

(12) **EUROPEAN PATENT SPECIFICATION**

(45) Date of publication and mention
of the grant of the patent:
**05.10.2016   Bulletin 2016/40**

(51) Int Cl.:
*H04N 21/4335* (2011.01)    *H04N 21/458* (2011.01)
*H04N 21/443* (2011.01)

(21) Application number: **11156631.1**

(22) Date of filing: **02.03.2011**

(54) **A method and device for accelerating the startup process of IP televisions**

Verfahren und Vorrichtung zur Beschleunigung des Startvorgangs von IP-Fernsehen

Procédé et dispositif pour accélérer le démarrage du processus de télévisions par IP

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **04.03.2010   TR 201001662**

(43) Date of publication of application:
**07.09.2011   Bulletin 2011/36**

(73) Proprietor: **Vestel Elektronik Sanayi ve Ticaret A.S.
45030 Manisa (TR)**

(72) Inventor: **Tuncer, Bora
34469 Istanbul (TR)**

(74) Representative: **Cayli, Hülya
Paragon Consultancy Inc.
Koza Sokak No: 63/2
GOP
06540 Ankara (TR)**

(56) References cited:
**EP-A1- 1 734 763        EP-A1- 2 134 093
EP-A1- 2 234 371        CN-A- 101 420 602
US-A1- 2009 288 116    US-A1- 2010 011 348**

**Description**

**Technical Field of Invention**

The present invention is related to a stochastic method developed for reducing the loading duration of the content which will be viewed in client device in IPTV systems during the startup.

**Prior Art**

Client devices in the IPTV systems used nowadays access the content information loaded and broadcasted on the servers and display them to the users. Internet infrastructure is utilized for transmission of the said content information to the client devices. In IPTV based closed systems when the client devices initially start up, they download the related contents to the local volatile storage unit by connecting to the servers, and whenever this process is finished, the client devices display the content in the local storage unit to the user by means of an internet browser.

Downloading all of the content information to be used during the startup process to the client device causes the prolongation of the startup duration and users are not allowed to use the client device efficiently. For this purpose, the broadcasted content information over the server is previously downloaded and written to a non-volatile storage unit of the client device. However, during startup, this causes the prolongation of the startup duration by controlling update status of content information.

In patent document, CN101304502 it is described how various pictures can be downloaded from the internet with the start up of the television. It does not mention any method to reduce the loading duration of the content information.

In another patent document, US2007078810, a method to observe the update times of web pages is described where the aim of this prior art invention do not target IPTV's. Instead, it has a structure which allows saving current date to compare with the previous content information following the download of the up-to-date content information in order to evaluate the update date of the web sites in a more efficient way.

**Brief Description of the Invention**

The purpose of the invention is to allow client devices to access to the content information over the servers during the startup process; and to reduce the loading duration of the mentioned content information under intense network traffic. Another purpose of the invention is to assign an update date for the content information lack of an expiration date or an update date. Furthermore, the invention aims at updating primarily the outdated content information among those with an assigned update time.

**Objective of the Invention**

The present invention aims to develop a device and a method to reduce the initial startup duration in the electronic devices such as set top box receivers, digital televisions and media players operating over Internet Protocol.

Another objective of the invention is to reduce the duration required for accessing of the client device to the servers in each startup by saving the said content information completely or partially in the non-volatile storage unit of the client device instead of downloading the content information to be displayed to the users by the client device from the servers under intense traffic at each startup.

Another objective of the present invention is to list the elements of the related content information in a table within the client device; and allow the prediction of the changes in the said elements of the related contents over the server by means of the mentioned list in the client device thereby reducing the duration to access the said content information.

Another objective of the present invention is to reduce the duration for accessing the content information by grading the relevant variation table using a specific stochastic model and then checking the elements through the server device or client device based on the grading value in view of the topology of the installed network.

Another objective of the present invention is to use system resource more controlled by performing the control of the content element updates on the server in the possible precalculated update frequency according to the values set in the table.

Another objective of the present invention is to provide assigning an update date for the content information having no expiration date or no update date. The invention also aims at updating primarily the outdated content information among those with an assigned update time.

## Brief Description of the Drawings

For the purposes of this invention, the method for reducing the start-up time and IPTV is illustrated in attached diagrams, among which:

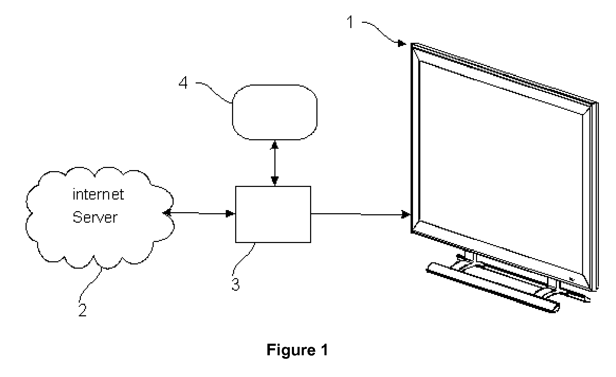

Figure 1; Schematic view of IPTV that is the subject of the invention.

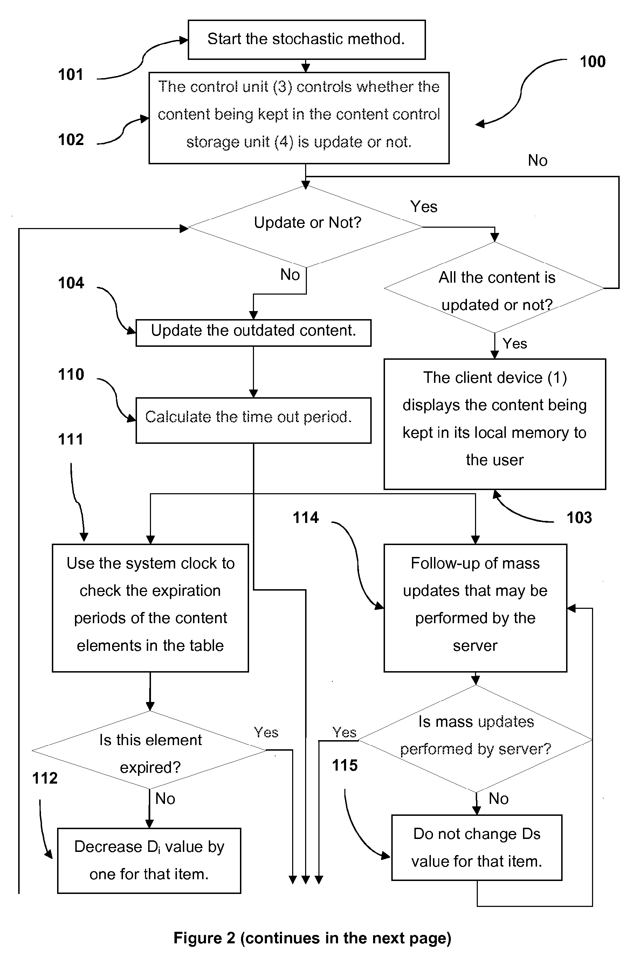

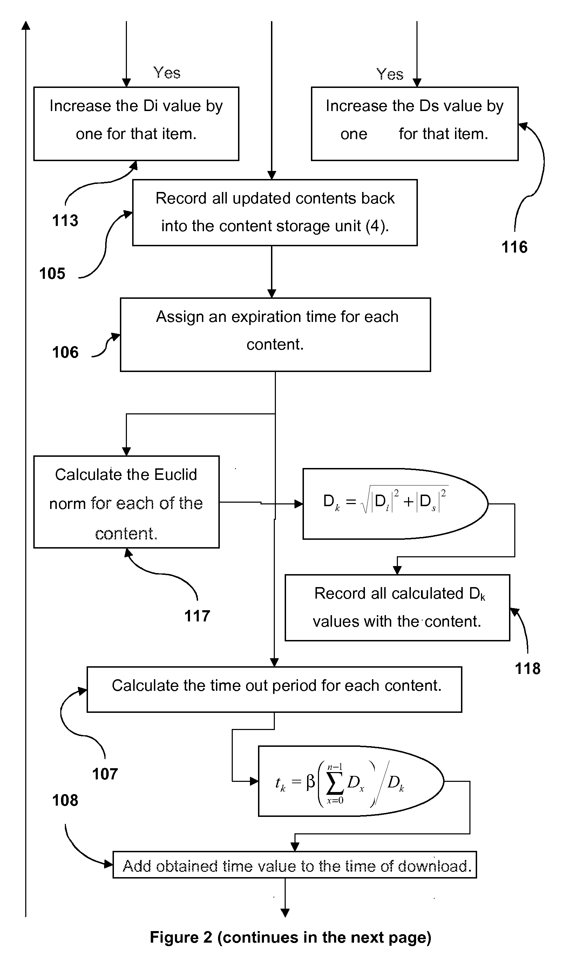

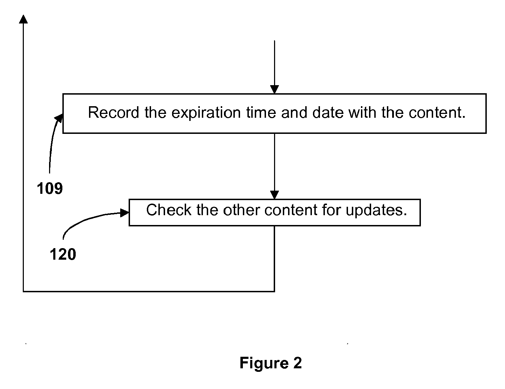

Figure 2; Flow diagram of the stochastic method to reduce the startup that is the subject of the invention.

In these figures, each part is numbered individually meaning:

| Client device | (1) |
|---|---|
| Server | (2) |
| Control unit | (3) |
| Storage unit | (4) |
| Stochastic method | (100) |

## Detailed Description of the Invention

Client device (1) operating through the Internet Protocol that is the subject of invention basically includes a control unit (3) and a content information storage unit (4). The control unit (3) both transmits the content information to be broadcasted onto the screen and performs downloading of the said content information through the server (2) as well as recording into the content storage unit (4).

In IPTV based closed systems, at the first start-up the client devices (1) download the related content information to the local volatile storage unit by connecting to the servers (2), and whenever this process is finished, the client devices (1) display the content information in the local storage unit (4) to the user by means of an internet browser. This process occurred at the first start-up takes a very long time within the intensive Internet traffic, and all processes are repeated whenever the system restarts since the content information is downloaded in the volatile memory area. Besides, loading of several client devices (1) to the servers (2) creates very intensive network traffic.

The present invention proposes having a copy of the content information that is on the server (2) on the client devices (1) as well. Thus, it will not be necessary to connect to the servers (2) at the start-up for the content information; so, the time used for downloading the content information will not be a problem.

In addition, it is possible to update one or more parts of the content information kept on the server (2). Due to the possibility of not being updated since the last server (2) access time, it is necessary to check whether they are still updated. Yet, it is critical to possess always the most updated version of the content information in order to be operated accurately by the client devices (1). For the control unit (3) to check the validity of the existing content information, it is preferred to have a stochastic method (100) operating on the basis of update frequency.

The stochastic method (100) in the present invention is started (101) with the start-up of the client device (1) by the control unit (3). The control unit (3), first of all, controls whether the content information being kept in the content storage unit (4) is updated (102). If all the content information is updated, the client device (1) displays the said content information being kept in its local memory to the user (103) either through the screen or through similar appropriate interfaces upon an instruction given by the control unit (3). If the content information is outdated, it updates the outdated content information (104) that needs to be updated. Another process is started simultaneously with the update, yet that will use minimum system resources operating at the background. This process will list the content elements in a table, and calculates a defined stochastic algorithm (100) for each content element and the timeout period (110).

Calculation of the timeout period involves two sub processes operating simultaneously at the background. One of these sub processes is to use the system clock to check the expiration periods of the content elements in the table (111). This is the most important and most consuming part of the algorithm in terms of process power. The second sub process is the follow-up of mass changes that may be performed by the server (114). This sub process (114) is in a continuous following with barred mode, and only contributes to the main process when it receives a mass update instruction from the server. Therefore, it does not consume power. Below is the operation of these two sub processes in order:

First one of the processes operating in the background is to check the expiration periods of the content elements in the table using the system clock (111): if there is a timeout for any content information, it checks the update status of the relevant element by connecting to the server (2). This control process may also be implemented on the server (2) or on the client device (1), depending on the network topology. As a result of the control process, if the relevant element is changed, a first parameter $D_i$ value is increased by one (113), if not said first parameter $D_i$ is decreased

by one as long as it is not below zero (112).

Nonetheless, sometimes there occurs a significant change on the content information kept on the server (2), and these changes are transmitted to the client device by the server (2) as a whole. As described above, the second sub process follows up the changes made by the server (2) by operating in the background (114). When there is a mass change notice from the server (2) to the client devices (1), the changes are done; but at the same time, a second parameter, $D_s$ value is determined by the proposed method (114). The said second parameter, $D_s$ value indicates a mass update of the content information by the server (2). Since all content information will be downloaded for once onto the client device (1) at the first moment of operation, the $D_s$ value is taken as 1 for each element at the beginning and this value is increased by one (116) for each mass update sent by the server (2) to the client devices. If there is no change on any content information by the server (2), $D_s$ value of this content information remains as it is (115).

The control unit (3) records all updated content information into the content storage unit (4) again (105). Doing this, it activates another process in the background that assigns an expiration time for each part of the content information (106). In order to determine the validity period of the contents, in other words the timeout period ('t'), distance of each element from zero change is calculated by using the Euclid norm (117) as shown in below equation (11). The zero change, which is the ideal situation, is a situation where the content elements are never updated. Data in the table are fixed, and the user is given permission for immediate access to this element.

$$D_k = \sqrt{\left|D_i\right|^2 + \left|D_s\right|^2} \qquad\qquad 11$$

According to equation (11) $D_k$ represents a third parameter. All $D_k$ values calculated for each one of content are recorded with the content information (118). $D_k$ values of this content information increase with often updating of the said content information. Following this, timeout period (t) for each one of content is calculated (107) using the following formula (12) wherein $\beta$ refers to system normalization constant and $t_k$ is the timeout value for the relevant element.

$$t_k = \beta\left(\sum_{x=0}^{n-1} D_x\right)\bigg/ D_k \qquad\qquad 12$$

Each $t_k$ time value obtained as a result of calculations is added to the download date and time of the content information (108), and the new date and time will show the update time for the content information. This data having time, date and expiration date of the content is saved along with the content information (109). Following this record, the other content information is checked for updates (120). The cycle is started with this control. If the said content information is not updated, content updating process (104) is performed for this content. Otherwise, the next content information is checked for updates. At the time of first start-up of the client device, yet after the completion of controlling of all contents, the cycle is broken and the contents are displayed to the user as described above (103). Since all these said processes will be performed in the background while the client device will be working in normal conditions, the content information may be displayed to the user during the performance of these processes.

During the recording of the updated content information into the storage unit (4) (105), as indicated above, all $D_s$ values are 1 at the start-up. Therefore, timeout period for all contents will be the same. However, these values will change during the operation of the client device (1) both in mass updates triggered by the server (2) and with the other updates to be detected by the client device (1). While the number is high for that content information accepted to have higher update potential and frequency, which is to be checked for determining the existence of the updates caused by lower timeout values for initial usages, this number will gradually decrease and correct itself to more often check the frequently updated contents.

Since the said stochastic method (100) will be re-operated each time the client device (1) is turned on, the correction process will vary depending on the on-off cycle, amount of content information and frequency of change for the content information. This proposed method will also continue working in the background, while the user is watching TV or playing games, to control the content elements and download the necessary ones into the local memory. Thus, total bandwidth used will be less leading to less intensity on the network.

Besides, in order to calculate the distance, it is possible to calculate Euclid norm plus arithmetic mean or compound of $D_i$ and $D_s$ values according to a different mathematics or statistics theory.

In order to calculate $t_k$ timeout value in the same manner, it is possible to realize the calculation according to any mathematical or statistical theory, which is connected to $D_i$ and $D_s$, and which helps to decrease the $t_k$ value that each content information corresponds on the basis of the change frequency.

EP 2 364 035 B1

In terms of preferred application of the invention, system normalization constant (β) may either be equal to a constant value determined during the production of the client device or may be changed later on by the user. To this aim, it is possible for the user to adjust the said constant to a low level or vice versa where content changes are more frequent.

## Claims

1. A stochastic method (100) for reducing the loading duration of the content information to client devices (1) through a server (2) at start-up in Internet Protocol based TV systems, comprising the steps of:

   - Starting said stochastic method (100) with the start-up of the client device (1) by a control unit (3) (101);
   - Controlling whether content information being kept in the content storage unit (4) is outdated or not (102);
   - If said content information is outdated, updating said outdated content information (104) that needs to be updated by said server (2);
   - Checking the update status of a relevant content information if an expiration date for said content information is reached,
   - Determination of a first parameter found by said client device (1) for each said content information, wherein said first parameter is increased by one if said related content information is updated at said expiration date and decreased by one, as long as it is not below zero, if said related content information is not updated at said expiration date;
   - Determination of a second parameter as to the update of said relevant content information during mass updates performed by said server (2) for each said content information, wherein said second parameter is increased by one for determination of an update for each content information as a result of each said mass update done by said server (2) or remained same with no updates done;
   - Recording said updated content information into said content storage unit (4) (105);
   - Determination of at least one timeout value for each content information, , according to a mathematical or statistical formula in proportion to said first and said second parameters;
   - Addition of each said timeout value reached as a result of calculations to download time and date of said content information (108) to generate a new expiration date for related content information;
   - Recording date and time data along with said content as information about an expiration date of said content information (109) and performing necessary updates

   **characterized in that** a said timeout value determination comprises the steps of ;

   - Calculation of Euclid norm (117) of said first parameter value, and said second parameter value;
   - Recording each said Euclid norm value as a third parameter value (118);
   - Calculating said timeout value by proportioning third parameter value of each content with total third values of all said content information and then by multiplying it with a normalization constant(107).

2. A stochastic method according to Claim 1 **characterized by** setting said normalization constant value preferably at a specific value or to a value which may be changed by user (100).

3. A client device (1) comprising means to perform said stochastic method (100) according to claim 1 or 2 **characterized in that** it comprises a control unit (3) that can download content information through a content storage unit (4) and a server (2) that can display such content information on the client device (1).

4. A control unit (3) according to Claim 3 **characterized in that** said expiration date determination steps are performed.

5. A client device (1) according to Claim 3 **characterized by** means for setting said normalization constant value preferably at a specific value or to a value which may be changed by a user.

## Patentansprüche

1. Stochastisches Verfahren (100) zur Reduzierung der Ladezeit der Content-Information an Client-Geräte (1) durch einen Server (2) bei einem Start bei Internet- Protokoll-basierten TV-Systemen, mit den Schritten:

- Starten des stochastischen Verfahrens (100) beim Start des Client-Geräts (1) durch eine Steuereinheit (3) (101);
- Überprüfen, ob die Content-Information, die in der Content-Speichereinheit (4) aufbewahrt ist, veraltet ist oder nicht (102);
- Falls die Content-Information veraltet ist, Aktualisieren der veralteten Content-Information (104), die von dem Server (2) aktualisiert werden muss;
- Überprüfen des Aktualisierungsstatus einer relevanten Content-Information, falls ein Ablaufzeitpunkt der Content-Information erreicht ist;
- Bestimmen eines ersten Parameters, der von dem Client-Gerät (1) festgestellt wurde, für jede der Content-Informationen, wobei der erste Parameter um eins erhöht wird, falls die zugehörige Content-Information bei dem Ablaufzeitpunkt aktualisiert ist, und um eins verringert wird, sofern er nicht unter null liegt, falls die zugehörige Content-Information an dem Ablaufzeitpunkt nicht aktualisiert ist;
- Bestimmen eines zweiten Parameters bezüglich der Aktualisierung der relevanten Content-Information während Massenaktualisierungen, die von dem Server (2) für jede der Content-Informationen durchgeführt wird, wobei der zweite Parameter für eine Bestimmung einer Aktualisierung für jede Content-Information infolge jeder Massenaktualisierung, die von dem Server (2) durchgeführt wurde, um eins erhöht wird, oder gleich bleibt, wenn keine Aktualisierungen durchgeführt wurden;
- Aufzeichnen der aktualisierten Content-Information auf der Content-Speichereinheit (4) (105);
- Bestimmen von zumindest einem Zeitüberschreitungswert für jede Content-Information nach einer mathematischen oder statistischen Formel im Verhältnis zu den ersten und den zweiten Parametern;
- Addition von jedem der erreichten Zeitüberschreitungswerte infolge von Berechnungen zur Download-Zeit und -Zeitpunkt der Content-Information (108), um einen neuen Ablaufzeitpunkt für eine zugehörige Content-Information zu erstellen;
- Aufzeichnen der Zeitpunkt- und Zeitdaten zusammen mit dem Content als Information über einen Ablaufzeitpunkt der Content-Information (109) und Durchführen von notwendigen Aktualisierungen,

**dadurch gekennzeichnet, dass** die Zeitüberschreitungswertbestimmung die Schritte umfasst;

- Berechnen der euklidischen Norm (117) des ersten Parameterwerts und des zweiten Parameterwerts;
- Aufzeichnen jedes Wertes der euklidischen Norm als dritten Parameterwert (118);
- Berechnen des Zeitüberschreitungswerts durch Verhältnisbildung des dritten Parameterwerts jedes Contents mit der Gesamtsumme dritter Werte aller Content-Informationen und anschließender Multiplikation mit einer Normalisierungskonstante (107).

2. Stochastisches Verfahren nach Anspruch 1, **dadurch gekennzeichnet, dass** der Wert der Normalisierungskonstante vorzugsweise auf einen spezifischen Wert oder zu einem Wert gesetzt wird, der von einem Nutzer (100) verändert werden kann.

3. Client-Gerät (1) mit einem Mittel zum Durchführen des stochastischen Verfahrens (100) nach Anspruch 1 oder 2, **dadurch gekennzeichnet, dass** es eine Steuereinheit (3), die eine Content-Information durch eine Content-Speichereinheit (4) herunterladen kann, und einen Server (2), der die Content-Information auf dem Client-Gerät (1) anzeigen kann, umfasst.

4. Steuereinheit (3) nach Anspruch 3, **dadurch gekennzeichnet, dass** die Schritte zur Bestimmung des Ablaufzeitpunkts durchgeführt werden.

5. Client-Gerät (1) nach Anspruch 3, **gekennzeichnet durch** Mittel zum Setzen des Wertes der Normalisierungskonstante vorzugsweise auf einen spezifischen Wert oder zu einem Wert, der von einem Nutzer verändert werden kann.

**Revendications**

1. Procédé stochastique (100) pour réduire la durée de chargement de l'information de contenu vers des dispositifs clients (1) par le biais d'un serveur (2) à la mise en marche de systèmes TV basés sur le protocole Internet, comprenant les étapes de :

- démarrage dudit procédé stochastique (100) avec la mise en marche du dispositif client (1) par une unité de commande (3) (101) ;
- contrôle pour déterminer si l'information de contenu conservée dans l'unité de stockage de contenu (4) est périmée ou non (102) ;
- si ladite information de contenu est périmée, mise à jour de ladite information de contenu périmée (104) qui nécessite d'être mise à jour par ledit serveur (2) ;
- vérification de l'état de mise à jour d'une information de contenu pertinente si une date d'expiration pour ladite information de contenu est atteinte,
- détermination d'un premier paramètre trouvé par ledit dispositif client (1) pour chaque dite information de contenu, dans lequel ledit premier paramètre est augmenté d'une unité si ladite information de contenu associée est mise à jour à ladite date d'expiration et diminué d'une unité, tant qu'il n'est pas en dessous de zéro, si ladite information de contenu associée n'est pas mise à jour à ladite date d'expiration ;
- détermination d'un deuxième paramètre en tant que mise à jour de ladite de continu pertinente durant des mises à jour à grande échelle réalisées par ledit serveur (2) pour chaque dite information de contenu, dans lequel ledit deuxième paramètre est augmenté d'une unité pour une détermination d'une mise à jour pour chaque information de contenu en tant que résultat de chaque dite mise à jour à grande échelle faite par ledit serveur (2) ou est conservé identique sans mises à jour faites ;
- enregistrement de ladite information de contenu mise à jour dans ladite unité de stockage de contenu (4) (105) ;
- détermination d'au moins une valeur de temps dépassé pour chaque information de contenu selon une formule mathématique ou statistique proportionnellement auxdits premier et deuxième paramètres ;
- addition de chaque dite valeur de temps dépassé atteinte en tant que résultat de calcul à une date et heure de téléchargement de ladite information de contenu (108) pour générer une nouvelle date d'expiration pour l'information de contenu associée ;
- enregistrement des données de date et d'heure conjointement audit contenu en tant qu'information au sujet d'une date d'expiration de ladite information de contenu (109) et exécution des mises à jour nécessaires **caractérisé en ce qu'**une dite détermination de la valeur de temps dépassé comprend les étapes de :
- calcul de la norme euclidienne (117) de la valeur dudit premier paramètre et de la valeur dudit deuxième paramètre ;
- enregistrement de chaque dite valeur de norme euclidienne en tant que valeur d'un troisième paramètre (118) ;
- calcul de ladite valeur de temps dépassé en proportionnant la valeur du troisième paramètre de chaque contenu avec des troisièmes valeurs totales de toutes lesdites informations de contenu et ensuite en la multipliant par une constante de normalisation (107).

2. Procédé stochastique selon la revendication 1, **caractérisé par** un réglage de ladite valeur de la constante de normalisation de préférence à une valeur spécifique ou à une valeur qui peut être changée par un utilisateur (100).

3. Dispositif client (1) comprenant un moyen pour exécuter ledit procédé stochastique (100) selon la revendication 1 ou 2, **caractérisé en ce qu'**il comprend une unité de commande (3) qui peut télécharger une information de contenu par une unité de stockage de contenu (4) et un serveur (2) qui peut afficher une telle information de contenu sur le dispositif client (1).

4. Unité de commande (3) selon la revendication 3 **caractérisée en ce que** lesdites étapes de détermination de date d'expiration sont exécutées.

5. Dispositif client (1) selon la revendication 3 **caractérisé par** un moyen de réglage de ladite valeur de la constante de normalisation de préférence à une valeur spécifique ou à une valeur qui peut être changée par un utilisateur.

**Figure 1**

**101**

Start the stochastic method.

**100**

**102**

The control unit (3) controls whether the content being kept in the content control storage unit (4) is update or not.

Update or Not?

Yes

No

No

All the content is updated or not?

**104**

Update the outdated content.

Yes

**110**

Calculate the time out period.

The client device (1) displays the content being kept in its local memory to the user

**111**

**103**

**114**

Use the system clock to check the expiration periods of the content elements in the table

Follow-up of mass updates that may be performed by the server

Is this element expired?

Yes

Yes

Is mass updates performed by server?

**112**

**115**

No

No

Decrease $D_i$ value by one for that item.

Do not change Ds value for that item.

**Figure 2 (continues in the next page)**

Yes

Increase the Di value by
one for that item.

Yes

Increase the Ds value by
one    for that item.

**113**

Record all updated contents back
into the content storage unit (4).

**105**

**116**

Assign an expiration time for each
content.

**106**

Calculate the Euclid
norm for each of the
content.

$$D_k = \sqrt{|D_i|^2 + |D_s|^2}$$

**117**

Record all calculated $D_k$
values with the content.

**118**

Calculate the time out period for each content.

**107**

$$t_k = \beta \left( \sum_{x=0}^{n-1} D_x \right) \Big/ D_k$$

**108**

Add obtained time value to the time of download.

**Figure 2 (continues in the next page)**

Record the expiration time and date with the content.

**109**

Check the other content for updates.

**120**

**Figure 2**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101304502
- US 2007078810 A